# EUROPÄISCHE PATENTSCHRIFT

(11) **EP 0 758 969 B1**
(45) Veröffentlichungstag und Bekanntmachung des Hinweises auf die Patenterteilung: **22.07.1998**
(21) Anmeldenummer: 95917981.3
(22) Anmeldetag: 28.04.1995
(51) Int. Cl.: B62D 5/12, F16L 37/12

(54) **ZAHNSTANGEN-HILFSKRAFTLENKUNG, INSBESONDERE FÜR KRAFTFAHRZEUGE**
RACK AND PINION POWER STEERING GEAR, IN PARTICULAR FOR MOTOR VEHICLES
DIRECTION ASSISTEE A CREMAILLERE, NOTAMMENT POUR VEHICULES AUTOMOBILES

(30) Priorität: 05.05.1994 DE 4415841
(43) Veröffentlichungstag der Anmeldung: 26.02.1997
(73) Patentinhaber: ZF FRIEDRICHSHAFEN Aktiengesellschaft, 88038 Friedrichshafen (DE)
(72) Erfinder: BREITWEG, Werner, D-73529 Bargau (DE); BIEBER, Jürgen, D-73529 Schwäbisch Gmünd (DE); RUPP, Arthur, D-73460 Hüttlingen (DE)
(74) Vertreter: Zietlow, Karl-Peter
(86) Internationale Anmeldenummer: EP9501631
(87) Internationale Veröffentlichungsnummer: WO9530568

(56) Entgegenhaltungen:
- WO-A-94/06668
- DE-A- 3 014 066
- DE-A- 4 237 481
- DE-C- 4 209 000

## Beschreibung

Die Erfindung betrifft eine Zahnstangen-Hilfskraftlenkung, insbesondere für Kraftfahrzeuge, nach dem Oberbegriff des Anspruchs 1. Bei einer derartigen Hilfskraftlenkung ist in einem Lenkgehäuse ein Ritzel drehbar gelagert. Eine Zahnstange ist in dem Lenkgehäuse axial verschiebbar geführt. Zur Hilfskraftunterstützung dient ein Servomotor, dessen Kolbenstange trieblich mit der Zahnstange verbunden ist. Eine Steuereinrichtung für die Steuerung des Druckmittels zu und von dem Servomotor ist in Abhängigkeit von einer Bewegung des Ritzels verstellbar. Die beiden Arbeitsräume des Servomotors sind mit der Steuereinrichtung über zwei Arbeitsleitungen verbunden, die an einen Zylinder des Servomotors und an die Steuereinrichtung über Anschlußteile angeschlossen und, ebenso wie eine Druckleitung von einer Servopumpe und eine zu einem Behälter führende Rücklaufleitung, durch Befestigungsmittel an den Anschlußteilen gehalten sind.

Es ist eine derartige Zahnstangen-Hilfskraftlenkung bekannt (DE-C-24 06 566), bei der die Rohrleitungen über Schraubverbindungen mit den Anschlußteilen verbunden sind. Derartige Schraubverbindungen müssen mit einem definierten Anzugsmoment montiert werden, um eine sichere Verbindung zu gewährleisten. Diese Art der Verbindung der Rohrleitungen mit den Anschlußteilen bedingt hohe Kosten für die Herstellung und Montage der einzelnen Teile.

Aus der DE.A.4237481 (Offenlegungstag: 11.05.94) ist eine Hilfskraftlenkung bekannt, bei der die Leitungen an den Anschlußteilen des Servomotors durch Haltespangen unter Vorspannung befestigt werden. Die Haltespangen weisen wenigstens ein elastisches Klemmteil auf, das in eine Hinterschneidung am freien Ende des Anschlußteils eingreift. Um ein leichtes Lösen bzw. eine zu leichte Demontage zu verhindern, weist die Haltespange wenigstens einen federnden Fortsatz auf, der das Anschlußteil umgreift und dadurch die Haltespange nach der Montage an dem Anschlußteil einrastend hält.

Der Erfindung liegt die Aufgabe zugrunde, eine derartige Zahnstangen-Hilfskraftlenkung weiterzuverbessern.

Diese Aufgabe wird durch die im Anspruch 1 gekennzeichnete Zahnstangen-Hilfskraftlenkung gelöst. Zweckmäßige und vorteilhafte Ausgestaltungen der Erfindung sind in den Unteransprüchen angegeben.

Erfindungsgemäß besitzt die Haltespange eine im wesentlichen rechteckige und ebene Grundfläche mit einem nach einer Seite der Grundfläche hin offenen Längsschlitz, der an seiner anderen Seite mit einer der Leitung angepaßten Rundung versehen ist für eine Montage der Haltespange von einer beliebigen Seite der Leitung her. Außerdem weist die Haltespange zwei zu den Längsseiten des Längsschlitzes im wesentlichen parallele, aus der Grundfläche heraus umgebördelte Fortsätze auf, die sowohl in Richtung senkrecht zur Grundfläche als auch in Richtung senkrecht zu den Längsseiten des Längsschlitzes federnd ausgebildet sind. Die beiden Fortsätze bilden zusammen eine gerundete, der Kontur der Hinterschneidung der Anschlußteile angepaßte Öffnung zur Montage und Halterung der Haltespange an dem Anschlußteil. Diese Öffnung ist zur offenen Seite des Längsschlitzes hin offen. Ihre Rundung reicht in Richtung zur offenen Seite des Längsschlitzes hin so weit, daß der Zwischenraum zwischen den beiden Enden der Rundung kleiner ist als der Durchmesser der Rundung, so daß bei einer Montage der Haltespange die beiden Fortsätze federnd an dem Anschlußteil zurückweichen und nach der Montage ihre ursprüngliche Form und Stellung wieder einnehmen. Dadurch umgreifen die Fortsätze teilweise das Anschlußteil, so daß die Haltespange an dem Anschlußteil, auch bei hohen Betriebsdrücken von etwa 150 bar, sicher gehalten ist.

Zwar ist aus der DE-A-42 09 000 ein Befestigungsmittel für fluidführende Leitungen bekannt, das aus einer Haltespange besteht, die im wesentlichen die gleiche Form wie die im Anspruch 1 definierte Haltespange hat. Dieses Dokument gibt jedoch keinen Hinweis darauf, daß die Fortsätze der Haltespange sowohl in Richtung senkrecht zur Grundfläche als auch in Richtung senkrecht zu den Längsseiten des Längsschlitzes federnd ausgebildet sind.

Durch diese Maßnahme wird der Vorteil erreicht, daß das Befestigungsmittel an dem Anschlußteil unter Vorspannung befestigt ist, so daß mit einem einzigen Sicherungselement sowohl ein Festhalten der Leitung an dem Anschlußteil in axialer Richtung als auch eine Sicherung der Haltespange gegen leichtes Lösen oder eine zu leichte Demontage von dem Anschlußteil erreicht werden.

Zweckmäßigerweise weist die Haltespange zwischen den beiden seitlichen Fortsätzen einen dritten Fortsatz auf. Dadurch wird die Umschlingung des Anschlußteils verbessert.

Im folgenden wird die Erfindung anhand eines in der Zeichnung dargestellten Ausführungsbeispieles näher erläutert.
Es zeigen:

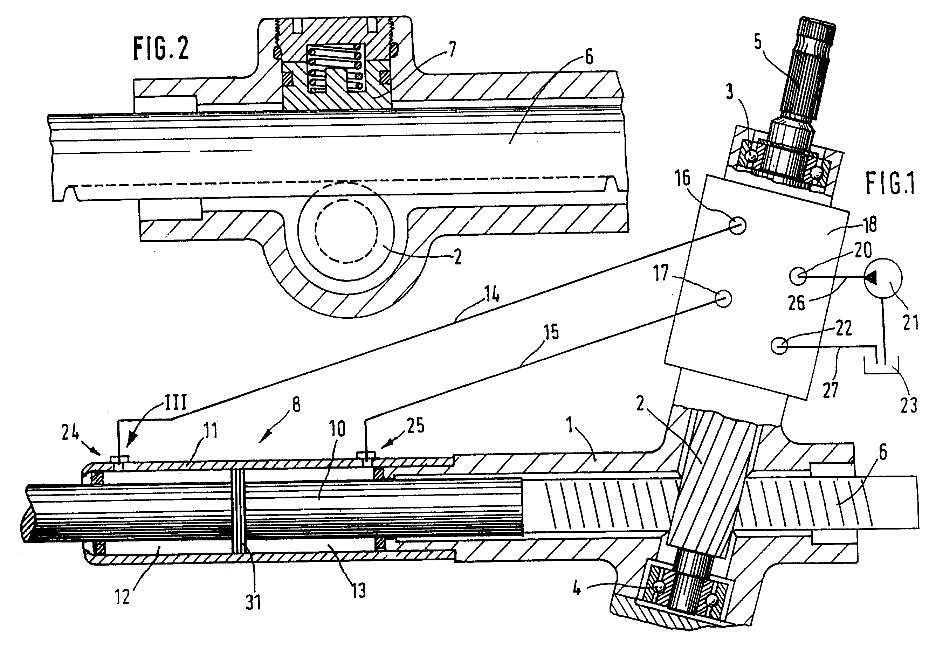

- Fig. 1: einen Längsschnitt durch die erfindungsgemäße Zahnstangen-Hilfskraftlenkung;
- Fig. 2: einen Teilquerschnitt durch die Zahnstangen-Hilfskraftlenkung der Fig. 1 im Bereich des Ritzels und des Druckstücks;
- Fig. 3: einen vergrößerten Ausschnitt aus dem Zylinderrohr gemäß dem Pfeil III in Fig. 1;
- Fig. 4: eine Draufsicht nur auf die Haltespange gemäß dem Pfeil IV in Fig. 3 und
- Fig. 5: den Schnitt durch die Haltespange nach der Linie V-V in Fig. 4.

In einem Lenkgehäuse 1 ist ein Ritzel 2 in zwei Lagern 3 und 4 drehbar gelagert. Das Ritzel 2 trägt an seinem einen Ende einen Lenkspindelanschluß 5 für den Anschluß an ein Lenkorgan, beispielsweise eine nicht dargestellte Lenkspindel mit einem Lenkhandrad.

Das Ritzel 2 steht über seine Verzahnung in Eingriff mit einer Zahnstange 6, die in dem Lenkgehäuse 1 axial verschiebbar geführt ist. Die Zahnstange 6 wird mit Hilfe eines federbelasteten Druckstückes 7 in bekannter Weise gegen die Verzahnung des Ritzels 2 gedrückt.

Zur Hilfskraftunterstützung dient ein Servomotor 8, dessen Kolbenstange 10 fest mit der Zahnstange 6 verbunden ist. Der Servomotor 8 enthält in einem Zylinder 11 zwei Zylinderräume 12 und 13, die über Arbeitsleitungen 14 und 15 mit zwei Zylinderanschlüssen 16 und 17 einer Steuereinrichtung 18 verbunden sind. Die Steuereinrichtung 18 weist außerdem noch einen Zulaufanschluß 20 auf, an den eine Servopumpe 21 angeschlossen ist. An einen Rücklaufanschluß 22 ist ein Behälter 23 angeschlossen. Die Arbeitsleitungen 14 und 15 sind an den Zylinder 11 über zwei Anschlußteile 24 und 25 angeschlossen.

Auch die Steuereinrichtung 18 weist Anschlußteile auf, an die die beiden Arbeitsleitungen 14 und 15 sowie eine Druckleitung 26 von der Servopumpe 21 und eine zu dem Behälter 23 führende Rücklaufleitung 27 angeschlossen sind. Die Anschlußstellen an der Steuereinrichtung 18 und an dem Zylinder 11 sind im wesentlichen gleichwertig. Im folgenden wird deshalb nur eine Anschlußstelle an dem Anschlußteil 24 beschrieben.

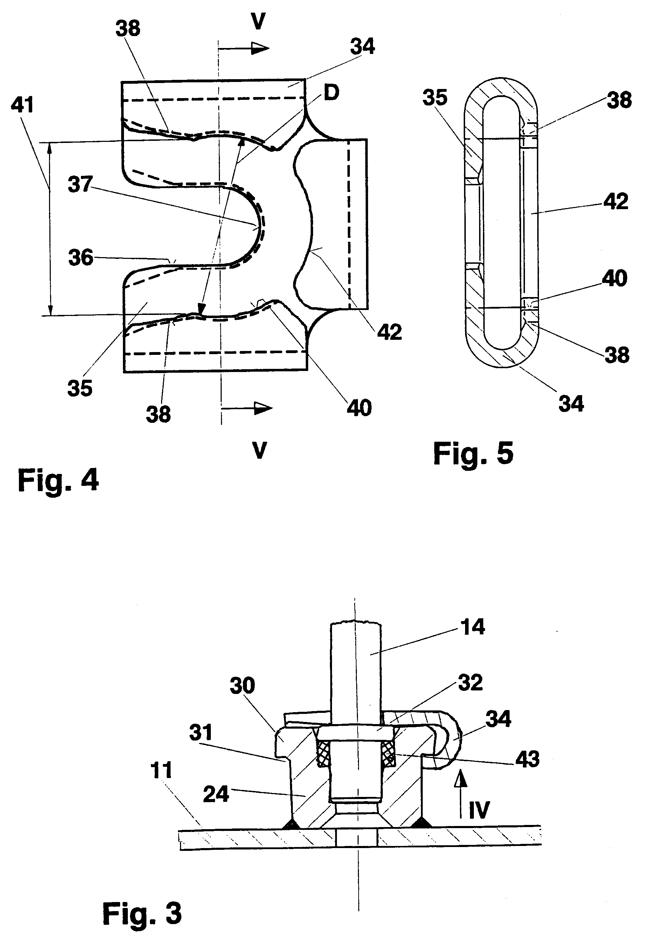

In dem Ausführungsbeispiel nach Fig. 3 ist das Anschlußteil 24 als separates Bauteil auf den Zylinder 11 aufgesetzt und in bekannter Weise daran befestigt. An seinem freien Ende ist an das Anschlußteil 24 ein Ringbund 30 mit einer Hinterschneidung 31 angeformt.

Jede Arbeitsleitung 14 und 15 - gleiches gilt auch für die Druckleitung 26 und die Rücklaufleitung 27 - weist an ihrem Ende einen ringförmigen, in seiner axialen Länge begrenzten Bereich vergrößerten oder verkleinerten Durchmessers in der Form eines Bundes 32 bzw. einer Ringnut auf. Ein Befestigungsmittel in der Form einer Haltespange 34 übergreift den Bund 32 und greift in die Hinterschneidung 31 des Anschlußteils 24 ein. Eine Ausführungsform der Haltespange 34 ist aus Fig. 4 zu entnehmen. Die Haltespange 34 besitzt eine im wesentlichen rechteckige und ebene Grundfläche, mit einem nach einer Seite der Grundfläche hin offenen Längsschlitz 36, der an seiner anderen Seite mit einer der Leitung 14 angepaßten Rundung 37 versehen ist. Der Längsschlitz 36 dient zur Montage der Haltespange 34 von einer beliebigen Seite der Leitung 14 her. Die Haltespange 34 weist außerdem zwei Fortsätze 38 auf, die zu den Längsseiten des Längsschlitzes 36 im wesentlichen parallel liegen und die aus der Grundfläche 35 heraus umgebördelt sind. Die Fortsätze 38 sind sowohl in einer Richtung senkrecht zu der Grundfläche 35 als auch in einer Richtung senkrecht zu den Längsseiten des Längsschlitzes 36 federnd ausgebildet. Die beiden Fortsätze 38 bilden zusammen eine gerundete, der Kontur der Hinterschneidung 31 des Anschlußteiles 24 angepaßte Öffnung 40 zur Montage und Halterung der Haltespange 34 an dem Anschlußteil 24.

Die Öffnung 40 ist zu der offenen Seite des Längsschlitzes 36 hin offen. Ihre Rundung reicht in Richtung zur offenen Seite des Längsschlitzes 36 hin so weit, daß der Zwischenraum 41 zwischen den beiden Enden der Rundung kleiner ist als der Durchmesser D der Rundung der Öffnung 40.

Die beiden Fortsätze 38 haben zwei Aufgaben: Zum einen dienen sie als elastische Klemmteile, die in die Hinterschneidung 31 am freien Ende des Anschlußteils 24 eingreifen und damit die Leitung 14 in axialer Richtung in dem Anschlußteil 24 festhalten. Zum anderen verhindern sie durch ihre Vorspannung in radialer Richtung des Anschlußteils 24 in montiertem Zustand ein leichtes Lösen bzw. eine zu leichte Demontage.

Um die Umschlingung des Anschlußteils 24 im Bereich der Hinterschneidung 31 zu vergrößern und damit die Sicherung der Leitung 14 in dem Anschlußteil 24 zu verbessern, wird zusätzlich zu den beiden Fortsätzen 38 ein weiterer Fortsatz 42 an der Haltespange 34 vorgesehen, der zwischen den beiden Fortsätzen 38 liegt. Die drei Fortsätze 38 und 42 bilden dann zusammen die Öffnung 40 mit einer gemeinsamen Rundung.

Die Leitung 14 ist in dem Anschlußteil 24 zylindrisch geführt und durch einen O-Ring 43 abgedichtet.

### Bezugszeichen

- 1: Lenkgehäuse
- 2: Ritzel
- 3: Lager
- 4: Lager
- 5: Lenkspindelanschluß
- 6: Zahnstange
- 7: Druckstück
- 8: Servomotor
- 9: -
- 10: Kolbenstange
- 11: Zylinder
- 12: Zylinderraum
- 13: Zylinderraum
- 14: Arbeitsleitung
- 15: Arbeitsleitung
- 16: Zylinderanschluß
- 17: Zylinderanschluß
- 18: Steuereinrichtung
- 19: -
- 20: Zulaufanschluß
- 21: Servopumpe
- 22: Rücklaufanschluß
- 23: Behälter
- 24: Anschlußteil
- 25: Anschlußteil
- 26: Druckleitung
- 27: Rücklaufleitung
- 28: -
- 29: -
- 30: Ringbund
- 31: Hinterschneidung
- 32: Bund
- 33: -
- 34: Haltespange
- 35: Grundfläche
- 36: Längsschlitz
- 37: Rundung
- 38: Fortsatz
- 39: -
- 40: Öffnung
- 41: Zwischenraum
- 42: Fortsatz
- 43: O-Ring

## Patentansprüche

1. Zahnstangen-Hilfskraftlenkung, insbesondere für Kraftfahrzeuge, mit folgenden Merkmalen:
- in einem Lenkgehäuse (1) ist ein Ritzel (2) drehbar gelagert;
- eine in dem Lenkgehäuse (1) axial verschiebbar geführte Zahnstange (6) wird durch ein federbelastetes Druckstück (7) in Eingriff mit dem Ritzel (2) gehalten;
- zur Hilfskraftunterstützung ist ein Servomotor (8) angeordnet, dessen Kolbenstange (10) trieblich mit der Zahnstange (6) verbunden ist;
- eine Steuereinrichtung (18) zur Steuerung eines Druckmittels zu und von dem Servomotor (8) ist in Abhängigkeit von einer Bewegung des Ritzels (2) verstellbar;
- die beiden Arbeitsräume (12, 13) des Servomotors (8) sind mit der Steuereinrichtung (18) über zwei Arbeitsleitungen (14, 15) verbunden, die an einen Zylinder (11) des Servomotors (8) und an die Steuereinrichtung (18) über Anschlußteile (24, 25) angeschlossen und, ebenso wie eine Druckleitung (26) von einer Servopumpe (21) und eine Rücklaufleitung (27) an einen Behälter (23), durch Befestigungsmittel an den Anschlußteilen (24, 25) gehalten sind,
dadurch **gekennzeichnet,**
- daß jede Arbeits-, Druck- und/oder Rücklaufleitung (14, 15, 26, 27) (im folgenden "Leitung" genannt) an ihrem freien Ende einen ringförmigen, in seiner axialen Länge begrenzten Bereich vergrößerten oder verkleinerten Durchmessers in der Form eines Bundes (32) bzw. einer Ringnut aufweist;
- daß jede Leitung (14, 15, 26, 27) durch ein den Bund (32) übergreifendes bzw. in die Ringnut eingreifendes Befestigungsmittel an dem Anschlußteil (24, 25) gehalten ist;
- daß das Befestigungsmittel nach der Montage elastisch verformt ist, an dem Anschlußteil (24, 25) unter Vorspannung befestigt ist und als Haltespange (34) ausgebildet ist mit wenigstens einem elastischen Klemmteil, das in eine Hinterschneidung (31) am freien Ende des Anschlußteils (24, 25) eingreift;
- daß die Haltespange (34) eine im wesentlichen rechteckige und ebene Grundfläche (35) besitzt, mit einem nach einer Seite der Grundfläche (35) hin offenen Längsschlitz (36), der an seiner anderen Seite mit einer der Leitung (14, 15, 26, 27) angepaßten Rundung (37) versehen ist für eine Montage der Haltespange (34) von einer beliebigen Seite der Leitung (14, 15, 26, 27) her, und mit zwei zu den Längsseiten des Längsschlitzes (36) im wesentlichen parallelen, aus der Grundfläche (35) heraus umgebördelten und in die Hinterschneidung eingreifenden, lappenförmigen Fortsätzen (38), die - das Anschlußteil (24, 25) übergreifend bzw. umgreifend - sowohl in Richtung senkrecht zur Grundfläche (35) als auch in Richtung senkrecht zu den Längsseiten des Längsschlitzes (36) federnd ausgebildet sind, so daß mit einem einzigen Sicherungselement sowohl ein Festhalten der Leitung (14, 15, 26, 27) an den Anschlußteil (24, 25) in axialer Richtung als auch eine Sicherung der Haltespange (34) gegen leichten Lösen und zu leichte Demontage von dem Anschlußteil (24, 25) erreicht werden.

2. Zahnstangen-Hilfskraftlenkung nach Anspruch 1, dadurch **gekennzeichnet,** daß die beiden Fortsätze (38) zusammen eine gerundete, an die Kontur der Hinterschneidung (31) der Anschlußteile (24, 25) angepaßte Öffnung (40) zur Montage und Halterung der Haltespange (34) an dem Anschlußteil (24, 25) bilden.

3. Zahnstangen-Hilfskraftlenkung nach Anspruch 2, dadurch **gekennzeichnet,** daß die Öffnung (40) zur Montage und Halterung der Haltespange (34) an dem Anschlußteil (24, 25) zur offenen Seite des Längsschlitzes (36) hin offen ist und daß ihre Rundung in Richtung zur offenen Seite des Längsschlitzes (36) hin so weit reicht, daß der Zwischenraum (41) zwischen den beiden Enden der Rundung kleiner ist als der Durchmesser (D) der Rundung der Öffnung (40).

4. Zahnstangen-Hilfskraftlenkung nach Anspruch 3, dadurch **gekennzeichnet,** daß die Haltespange (34) an ihrer der offenen Seite des Längsschlitzes (36) gegenüberliegenden Seite einen dritten Fortsatz (42) aufweist und daß alle drei Fortsätze (38, 42) zusammen die Öffnung (40) zur Montage und Halterung der Haltespange (34) an dem Anschlußteil (24, 25) bilden, so daß die Haltespange (34) nach ihrer Montage an dem Anschlußteil (24, 25) einrastend gehalten ist.

5. Zahnstangen-Hilfskraftlenkung nach Anspruch 4, dadurch **gekennzeichnet,** daß die Leitung (14, 15, 26, 27) in dem Anschlußteil (24) zylindrisch geführt und durch einen O-Ring (43) abgedichtet ist.

## Claims

1. Rack-and-pinion power steering, in particular for motor vehicles, having the following features:
- a pinion (2) is mounted rotatably in a steering gear housing (1);
- a gear rack (6) guided in an axially displaceable manner in the steering gear housing (1) is held in mesh with the pinion (2) by a spring-loaded thrust pad (7);
- for power assistance a servomotor (8) is provided, the piston rod (10) of which is connected to the gear rack (6) so as to drive it;
- a control device (18) for directing a pressure medium to and away from the servomotor (8) is adjustable in dependence upon a movement of the pinion (2);
- the two working chambers (12, 13) of the servomotor (8) are connected to the control device (18) by two working lines (14, 15), which are connected to a cylinder (11) of the servomotor (8) and to the control device (18) by connecting parts (24, 25) and are held, as are a pressure line (26) of a power-steering pump (21) and a return line (27) to a tank (23), by fastening means on the connecting parts (24, 25),
characterized in
- that each working, pressure and/or return line (14, 15, 26, 27) (hereinafter referred to as "line") at its free end has an annular region of limited axial length and of an increased or reduced diameter in the form of a collar (32) or annular groove;
- that each line (14, 15, 26, 27) is held on the connecting part (24, 25) by a fastening means, which overlaps the collar (32) or engages into the annular groove;
- that the fastening means after assembly is elastically deformed, is fastened under initial tension to the connecting part (24, 25) and takes the form of a holding clasp (34) having at least one elastic clamping part, which engages into an undercut (31) at the free end of the connecting part (24, 25);
- that the holding clasp (34) has a substantially rectangular and flat base (35), having a longitudinal slot (36), which is open towards one side of the base (35) and at its other end is provided with a curvature (37) adapted to the line (14, 15, 26, 27) for the purpose of mounting the holding clasp (34) from any desired side of the line (14, 15, 26, 27), and having two lug-shaped extensions (38) substantially parallel to the longitudinal sides of the longitudinal slot (36), flanged out from the base (35) and engaging into the undercut, which extensions-overlapping or embracing the connecting part (24, 25) - are designed to be resilient both in a direction at right angles to the base (35) as well as in a direction at right angles to the longitudinal sides of the longitudinal slot (36), so that with a single locking element both a fastening of the line (14, 15, 26, 27) to the connecting part (24, 25) in an axial direction and a locking of the holding clasp (34) against easy detachment and over-simple dismantling from the connecting part (24, 25) are achieved.

2. Rack-and-pinion power steering according to claim 1, characterized in that the two extensions (38) together form a curved opening (40) adapted to the undercut (31) of the connecting parts (24, 25) for mounting and holding the holding clasp (34) on the connecting part (24, 25).

3. Rack-and-pinion power steering according to claim 2, characterized in that the opening (40) for mounting and holding the holding clasp (34) on the connecting part (24, 25) is open towards the open side of the longitudinal slot (36) and that its curvature extends so far in the direction of the open side of the longitudinal slot (36) that the space (41) between the two ends of the curvature is smaller than the diameter (D) of the curvature of the opening (40).

4. Rack-and-pinion power steering according to claim 3, characterized in that the holding clasp (34) at its opposite side to the open side of the longitudinal slot (36) has a third extension (42) and that all three extensions (38, 42) together form the opening (40) for mounting and holding the holding clasp (34) on the connecting part (24, 25), so that the holding clasp (34) after being mounted is held snapped into place on the connecting part (24, 25).

5. Rack-and-pinion power steering according to claim 4, characterized in that the line (14, 15, 26, 27) is cylindrically guided in the connecting part (24) and sealed off by means of an O-ring (43).

## Revendications

1. Direction assistée à crémaillère, notamment pour véhicules automobiles, présentant les caractéristiques suivantes :
- dans un boîtier de direction (1), un pignon (2) est monté de façon à pouvoir pivoter;
- une crémaillère (6), axialement mobile dans le boîtier de direction (1), est maintenue en prise avec le pignon (2) grâce à une pièce de pression (7) commandée par ressort;
- un servomoteur (8), dont la tige de piston (10) est couplée avec la crémaillère (6) lors du fonctionnement, est monté pour seconder la direction assistée;
- une installation de distribution (18), pour distribuer un fluide sous pression vers le servomoteur (8) et de retour à partir de celui-ci, est réglable en fonction d'un mouvement du pignon (2);
- les deux chambres de travail (12, 13) du servomoteur (8) sont reliées avec l'installation de distribution (18) par deux conduites de travail (14, 15) qui sont raccordées à un cylindre (11) du servomoteur (8) et à l'installation de distribution (18) au moyen d'éléments de raccordement (24, 25) et sont retenues par des pièces de fixation aux éléments de raccordement (24, 25), de même, une conduite sous pression (26) d'une servopompe (21) et une conduite de retour (27) à un réservoir (23) sont retenues par des moyens de fixations aux éléments de raccordement (24, 25).
**caractérisée**
- en ce que chaque conduite de travail, de pression et/ou de retour (14, 15, 26, 27 (appelée ci-après "conduite") présente à son extrémité libre, sur une zone annulaire délimitée dans sa longueur axiale un diamètre agrandi ou rétréci sous forme d'un collet (32), respectivement d'une rainure annulaire;
- en ce que chaque conduite (14, 15, 26, 27) est retenue sur l'élément de raccordement (24, 25) par un moyen de fixation s'engageant dans le collet (32), respectivement dans la rainure annulaire;
- en ce que le moyen de fixation est déformé élastiquement après le montage, en ce qu'il est fixé sous précontrainte à l'élément de raccordement (24, 25) et constitue une boucle de retenue (34) avec au moins une partie élastique de serrage qui s'engage dans une contre-dépouille (31) située à l'extrémité libre de l'élément de raccordement (24, 25);
- en ce que la boucle de retenue (34) possède une surface de base (35) essentiellement rectangulaire et plane présentant une fente longitudinale (36) ouverte vers un côté de la surface de base (35) et présentant à son autre extrémité, un arrondi (37) adapté à la conduite (14, 15, 26, 27) pour le montage de la boucle de retenue (34) à partir de n'importe quel côté de la conduite (14, 15, 26, 27) et avec deux prolongements (38) sous forme de lobes essentiellement parallèles aux côtés longitudinaux de la fente longitudinale (36), bordant la surface de base (35) et s'engageant dans la contre-dépouille, qui - recouvrant, respectivement enveloppant l'élément de raccordement (24, 25) - sont élastiques aussi bien dans le sens perpendiculaire à la surface de base (35) que dans le sens perpendiculaire aux côtés longitudinaux de la fente longitudinale (36), de façon qu'avec un seul élément d'arrêt sont obtenus aussi bien le maintien de la conduite (14, 15, 26, 27) sur l'élément de raccordement (24, 25) dans le sens axial, que la protection de la boucle de retenue (34) contre un détachement facile et un démontage trop facile de l'élément de raccordement (24, 25).

2. Direction assistée à crémaillère selon la revendication 1, **caractérisée** en ce que les deux prolongements (38) forment ensemble une ouverture arrondie (40) adaptée au contour de la contre-dépouille (31) des éléments de raccordement (24, 25), pour le montage et le maintien de la boucle de retenue (34) sur l'élément de raccordement (24, 25).

3. Direction assistée à crémaillère selon la revendication 2, **caractérisée** en ce que l'ouverture (40) pour le montage et le maintien de la boucle de retenue (34) sur l'élément de raccordement (24, 25) est ouverte vers le côté ouvert de la fente longitudinale (36) et que son arrondi vers le côté ouvert de la fente longitudinale (36) s'étend assez loin pour que l'espace (41) entre les deux extrémités de l'arrondi soit plus petit que le diamètre (D) de l'arrondi de l'ouverture (40).

4. Direction assistée à crémaillère selon la revendication 3, **caractérisée** en ce que la boucle de retenue (34) présente à son côté opposé au côté ouvert de la fente longitudinale (36), un troisième prolongement (42) et que tous les trois prolongements (38, 42) forment ensemble l'ouverture (40) pour le montage et le maintien de la boucle de retenue (34) sur l'élément de raccordement (24, 25), de façon que la boucle de retenue (34) soit maintenue encliquetée après son montage sur l'élément de raccordement (24, 25)

5. Direction assistée à crémaillère selon la revendication 4, **caractérisée** en ce que la conduite (14, 15, 26, 27) est agencée de manière cylindrique dans l'élément de raccordement (24), et en ce que son étanchéité est assurée par un joint torique (43).
